# EUROPÄISCHE PATENTSCHRIFT

(11) **EP 4 052 562 B1**
(45) Veröffentlichungstag und Bekanntmachung des Hinweises auf die Patenterteilung: **28.06.2023**
(21) Anmeldenummer: 21160772.6
(22) Anmeldetag: 04.03.2021
(51) Int. Cl.: A01D 61/00

(54) **NOCKENRAD ZUM AUFNEHMEN EINES NOCKENRIEMENS SOWIE VERFAHREN ZU DESSEN HERSTELLUNG**
CAM WHEEL FOR RECEIVING A CAM BELT AND METHOD OF MANUFACTURING THE SAME
ROUE À CAMES DESTINÉE À LA RÉCEPTION D'UNE COURROIE À CAMES, AINSI QUE SON PROCÉDÉ DE FABRICATION

(43) Veröffentlichungstag der Anmeldung: 07.09.2022
(73) Patentinhaber: Arnold Jäger Holding GmbH, 30559 Hannover (DE)
(72) Erfinder: OORD, Johan, 9717 KV Groningen (NL)
(74) Vertreter: Bremer, Ulrich

(56) Entgegenhaltungen:
- EP-A1- 2 965 612
- EP-B1- 3 158 851
- DE-A1-102009 036 104

## Beschreibung

Die vorliegende Erfindung betrifft ein Nockenrad zum Aufnehmen eines Nockenriemens, beispielsweise in einer landwirtschaftlichen Maschine oder in einem Transportsystem in der Prozessindustrie oder in Waschanlagen, gemäß dem Oberbegriff des Anspruchs 1, sowie ein Verfahren zum Herstellen eines derartigen Nockenrades.

Landwirtschaftliche Maschinen können eine Vielzahl von endlos ausgeführten Bändern bzw. Riemen aufweisen, die im Betrieb der Maschinen jeweils auf mindestens zwei Rollen bzw. Rädern, zwischen denen sie aufgespannt sind, endlos umlaufen. Eines der Räder dient normalerweise dem Antrieb des Riemens und das bzw. die anderen Räder der Umlenkung. Die Räder können beispielsweise Riemenscheiben sein, auf denen Flachriemen reibschlüssig bzw. kraftschlüssig aufliegen, oder Nockenräder, auf denen Nockenriemen formschlüssig aufliegen. Auch in der Prozessindustrie laufen Transportbänder bzw. Förderbänder auf derartigen Nockrädern um.

Derartige Nockenräder weisen beispielsweise Nabenscheiben auf, die verdrehfest auf einer Antriebswelle befestigt sind und an deren Umfang Mitnahmemittel in Form von zylindrischen Bolzen lotrecht abragend angeschweißt sind. Die Nocken des Nockenriemens liegen im Betrieb in Lücken zwischen den Mitnahmemitteln, so dass der Nockenriemen durch Ausbilden eines Formschlusses bei angetriebener Antriebswelle mitgenommen werden kann bzw. das lediglich der Umlenkung dienende Nockenrad vom angetriebenen Nockenriemen mitgenommen werden kann. Statt die Mitnahmemittel an den Nabenscheiben anzuschweißen, können die Nockenräder mit den Mitnahmemitteln auch einteilig als Gussteil ausgebildet sein. Beispielhaft ist dies in EP 3 158 851 B1 oder DE 10 2009 036 104 A1 beschrieben. Weitere Ausführungsvarianten eines solchen Nockenrades mit lotrecht abstehenden Mitnahmemitteln ist in EP 2 965 612 A1, EP 3 381 268 A1, US 3,472,563 A1 oder EP 3 289 854 A1 beschrieben.

Nachteilig dabei ist, dass derartige Nockenräder als Gussteile oder mit angeschweißten Mitnahmemitteln aufwändig und teuer herzustellen sind. Zudem ist eine Anpassung eines gegossenen Nockrades an Nockenriemen mit unterschiedlicher Teilung mit hohem Aufwand verbunden ist, da die Gussformen aufwändig anzupassen sind.

Aufgabe der vorliegenden Erfindung ist daher, ein Nockenrad bereitzustellen, das modular bzw. flexibel aufgebaut werden kann und dabei schnell und einfach herzustellen ist.

Diese Aufgabe wird erfindungsgemäß durch ein Nockenrad gemäß Anspruch 1 sowie ein Verfahren zum Herstellen eines derartigen Nockrades gemäß dem weiteren unabhängigen Anspruch gelöst. Die Unteransprüche beschreiben bevorzugte Weiterbildungen.

Erfindungsgemäß ist demnach bei einem Nockenrad mit mehreren lotrecht von einer Nabenscheibe abstehenden und voneinander beabstandeten Mitnahmemitteln bzw. Finger oder Zähnen vorgesehen, dass an einem ersten Ende des jeweiligen Mitnahmemittels ein Schaft ausgebildet ist, der in eine Öffnung in der Nabenscheibe eingesteckt ist, und der Schaft endseitig derartig zu einem Schließkopf umgeformt ist, dass die Nabenscheibe zwischen dem Schließkopf und einem zwischen dem Schaft und einem Riemenauflagebereich des Mitnahmemittels ausgebildeten Absatz eingeklemmt ist.

Dadurch wird vorteilhafterweise eine flexible Befestigung der Mitnahmemittel an der Nabenscheibe ermöglicht, da die Öffnungen mit einem an die Teilung des zu verwendenden Nockenriemens angepassten Abstand auf einem Kreis liegend in die Nabenscheibe eingebracht werden können und anschließend vorkonfektionierte und in hohen Stückzahlen lagerbare Mitnahmemittel durch Einstecken und Umformen an der Nabenscheibe befestigt werden können. Die Nabenscheibe kann dabei beispielsweise in flexibler Weise durch ein Strahlschneidverfahren, wie Laserschneiden oder Wasserstrahlschneiden hergestellt werden. Dadurch ist eine Anpassung des Nockenrades an unterschiedlich geteilte Nockenriemen in einfacher Weise möglich, ohne die dafür zu verwendeten Werkzeuge aufwändig anpassen zu müssen. Auch eine Anpassung der Mitnahmemittel ist ohne aufwändige Anpassung möglich.

Auch der Verbindungsvorgang, der vergleichbar zu einem Nietvorgang erfolgen kann, bei dem das Mitnahmemittel selbst als Niet fungiert, ist einfach durchführbar, beispielsweise mithilfe einer Presse bzw. eines Presswerkzeuges, die bzw. das vorzugsweise auch mehrere Umformvorgänge zum Ausbilden des Schließkopfes auch gleichzeitig durchführen kann. Daher können mehrere, vorzugsweise alle eingesteckten Mitnahmemittel gleichzeitig an der Nabenscheibe befestigt werden. Dadurch können der Kosten- und Montageaufwand minimiert werden.

Gattungsgemäß wird dabei ausgegangen von einem Nockenrad zum Aufnehmen eines Nockenriemens, beispielsweise in einer landwirtschaftlichen Maschine oder in einem Transportsystem in der Prozessindustrie oder in Waschanlagen, wobei das Nockenrad den Nockenriemen antreibt oder aber das Nockenrad lediglich der Umlenkung dient und der angetriebene Nockenriemen das Nockenrad mitnimmt. Das Nockenrad weist die Nabenscheibe zum Aufsetzen auf eine Welle, beispielsweise auf eine Antriebswelle oder Mitnahmewelle, und die daran wie oben beschrieben befestigten mehreren Mitnahmemitteln mit Riemenauflagebereichen zur Aufnahme des Nockenriemens auf, wobei der Nockenriemen insbesondere zwischen den Nocken auf den Riemenauflagebereichen aufliegt. Die Mitnahmemittel sind derartig lotrecht abstehend an der Nabenscheibe befestigt, dass sich zwischen den Mitnahmemitteln Lücken ausbilden, um die Nocken des Nockenriemens formschlüssig aufzunehmen.

Vorzugsweise ist weiterhin vorgesehen, dass die Mitnahmemittel im Riemenauflagebereich und/oder im Bereich des Schafts im Querschnitt symmetrisch, insbesondere rund, oder asymmetrisch ausgeführt sind. Dadurch kann je nach Anforderung oder Anwendung des Nockenrades ein unterschiedlicher Querschnitt gewählt werden, um einen optimierten Lauf des Nockenriemens auf dem Nockenrad zu gewährleisten. Durch einen asymmetrischen Schaft kann zusätzlich eine Verdrehsicherheit und auch eine Montage unter der korrekten Ausrichtung des asymmetrisch geformten Mitnahmemittels erreicht werden.

Vorzugsweise ist weiterhin vorgesehen, dass sich das Mitnahmemittel im Riemenauflagebereich vom Absatz ausgehend zu einem zweiten Ende des Mitnahmemittels hin verjüngt. Auch auf diese Weise kann eine variable an die Anwendung angepasste Form des Mitnahmemittels verwendet werden um einen optimierten bzw. gewünschten Lauf des Nockenriemens zu erreichen.

Vorzugsweise ist weiterhin vorgesehen, dass an einem zweiten Ende zumindest einiger der Mitnahmemittel eine konzentrisch zur Nabenscheibe angeordnete Ringscheibe befestigt ist. Durch eine derartige Ringscheibe kann das Nockenrad zusätzlich verstärkt werden und dadurch ein Abknicken der Mitnahmemittel unter Belastung durch den Nockenriemen vermieden werden, da Kräfte zusätzlich in die Ringscheibe abgeleitet werden können.

Dazu kann vorzugsweise vorgesehen sein, dass die Ringscheibe formschlüssig und/oder kraftschlüssig an den zweiten Enden der zumindest einigen Mitnahmemittel befestigt ist, beispielsweise angeschraubt und/oder angeschweißt und/oder die Ringscheibe endseitig an den Mitnahmemitteln verklemmt ist. Daher sind eine Reihe von Verbindungsarten möglich, wobei insbesondere auch auf die "Nietverbindung" vergleichbar zur Verbindung zwischen dem Schaft und der Nabenscheibe vorgesehen sein kann, um die Ringscheibe endseitig an den Mitnahmemitteln zu verklemmen, so dass insgesamt eine flexible und einfache Montage ohne zusätzliche Verbindungsmittel ermöglicht wird.

Erfindungsgemäß ist auch ein Verfahren zum Herstellen eines Nockenrades, insbesondere eines erfindungsgemäßen Nockenrades, mit mindestens den folgenden Schritten vorgesehen:
- Bereitstellen einer Nabenscheibe mit mehreren Öffnungen sowie mehrerer Mitnahmemittel mit Riemenauflagebereichen zur Aufnahme eines Nockenriemens;
- Einstecken der Mitnahmemittel in die Öffnungen der Nabenscheibe von einer Vorderseite der Nabenscheibe aus derartig, dass die Mitnahmemittel lotrecht, d.h. parallel zu einer Drehachse des Nockenrades, von der Vorderseite der Nabenscheibe abstehen und sich aufgrund eines Abstandes zwischen den Öffnungen in der Nabenscheibe eine Lücke zwischen den eingesteckten Mitnahmemitteln ausbildet, in der die Nocken des im Betrieb aufliegenden Nockenriemens liegen;
- Ausbilden eines Schließkopfes auf einer Rückseite der Nabenscheibe durch ein endseitiges Umformen eines aus den Öffnungen auf der Rückseite der Nabenscheibe herausragenden Teils des Schafts, so dass die Nabenscheibe zwischen dem ausgebildeten Schließkopf und einem zwischen dem Schaft und dem Riemenauflagebereich ausgebildeten Absatz eingeklemmt wird.

Auf diese Weise kann also das Mitnahmemittel selbst als Verbindungsmittel nach Art eines Niets fungieren, um das Mitnahmemittel in einfacher Weise lotrecht abstehend an der Nabenscheibe fixieren zu können.

Vorzugsweise ist dabei vorgesehen, dass in den Schaft stirnseitig eine Vertiefung, beispielsweise eine Bohrung oder eine Fräsung, eingebracht wird, so dass sich ein ringförmiger Endbereich am Schaft ausbildet, und der ringförmige Endbereich des Schafts zum Ausbilden des Schließkopfes nach außen hin umlaufend umgeformt wird, beispielsweise durch eine Presse bzw. ein Presswerkzeug, das entsprechend auf den Schaft endseitig aufgedrückt wird. Auf diese Weise kann das Umformen vereinfacht werden, da lediglich der ringförmig ausgebildete Bereich zur Seite hin umzubiegen ist, um den Schließkopf auszubilden und die Klemmung der Nabenscheibe zu bewirken.

Die Erfindung wird nachstehend anhand von Ausführungsbeispielen näher erläutert. Es zeigen:
- Fig. 1: eine perspektivische Vorderansicht eines Nockenrades;
- Fig. 1a: das Nockenrad gemäß Fig. 1 mit einem Nockenriemen;
- Fig. 2: eine perspektivische Rückansicht des Nockenrades gemäß Fig. 1;
- Fig. 3a, 3b: eine Draufsicht auf Mitnahmemittel des Nockenrades gemäß Fig. 1;
- Fig. 4a, 4b: eine Schnittansicht auf die Mitnahmemittel im montierten Zustand;
- Fig. 5a, 5b: eine alternative Ausführung von Mitnahmemitteln; und
- Fig. 6: eine Nockenrad mit einer zusätzlichen Sicherungsscheibe.

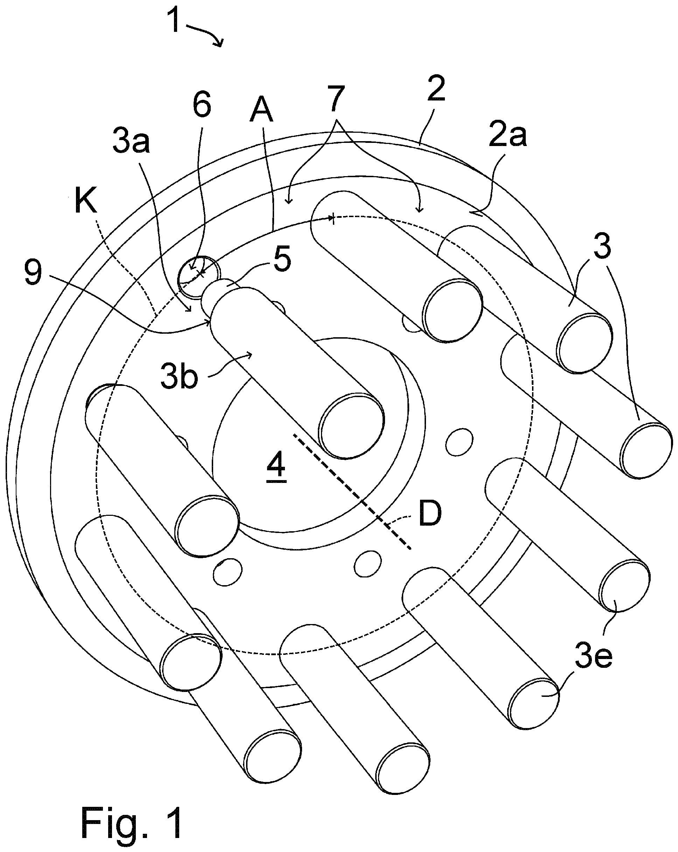

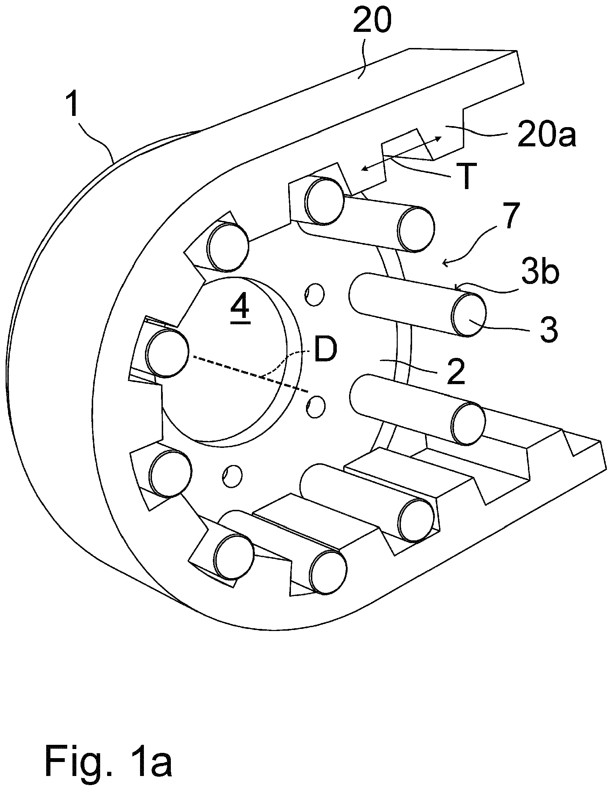

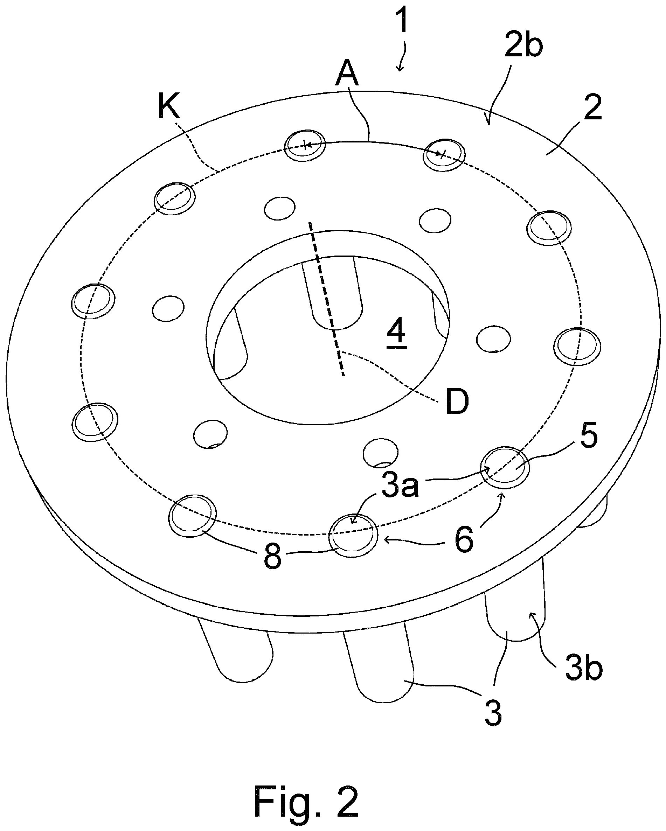

In Fig. 1 und Fig. 2 ist jeweils ein Nockenrad 1 in einer perspektiven Ansicht dargestellt. Das Nockenrad 1 weist eine Nabenscheibe 2 auf, an deren Umfang Mitnahmemittel 3 angeordnet sind, die im gezeigten Ausführungsbeispiel als zylindrische Bolzen ausgeführt sind. Die Nabenscheibe 2 weist ein Durchgangsloch 4 auf, mit dem das Nockenrad 1 auf einer nicht dargestellten Welle befestigt werden kann, um eine Drehung des Nockenrades 1 um eine entsprechende Drehachse D zu ermöglichen.

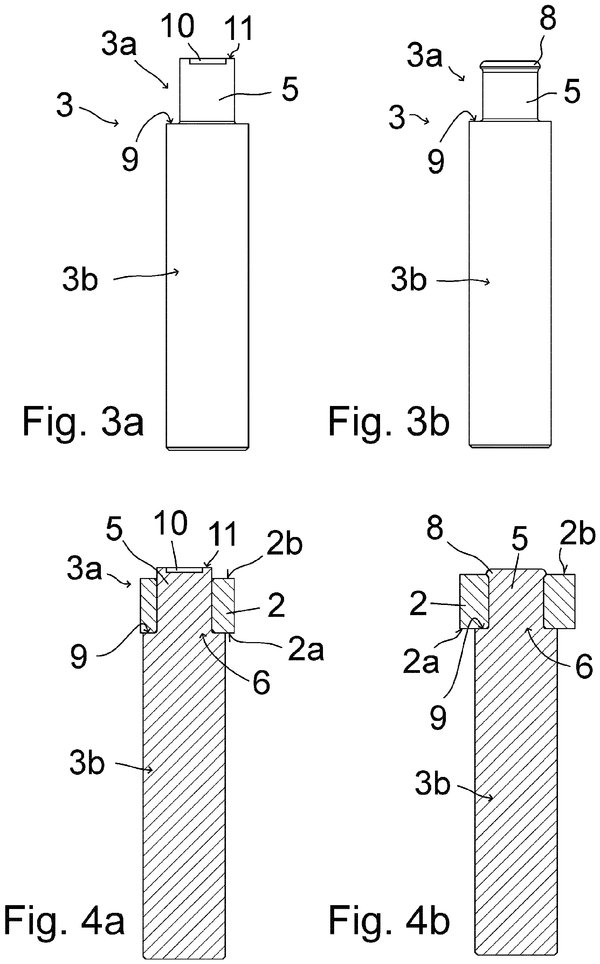

Die Mitnahmemittel 3 weisen wie in den Figuren 3a, 3b dargestellt an einem ersten Ende 3a jeweils einen Schaft 5 auf, der im dargestellten Ausführungsbeispiel einen runden Querschnitt aufweist. Weiterhin ist am Mitnahmemittel 3 ein Riemenauflagebereich 3b mit ebenfalls rundem Querschnitt vorgesehen, dessen Durchmesser größer ist als der Durchmesser des Schafts 5. Dadurch bildet sich zwischen dem Schaft 5 und dem Riemenauflagebereich 3b ein Absatz 9 aus. Der Schaft 5 wird zur Montage des Mitnahmemittels 3 durch eine komplementär zum Schaft 5 ausgebildete Öffnung 6 (hier kreisrund) in der Nabenscheibe 2 gesteckt, bis der Absatz 9 an einer Vorderseite 2a der Nabenscheibe 2 anliegt und der Schaft 5 auf einer Rückseite 2b aus der Nabenscheibe 2 herausragt (s. Fig. 4a).

Die Befestigung der eingesteckten Mitnahmemittel 3 an der Nabenscheibe 2 erfolgt erfindungsgemäß durch einen Umformvorgang, der vergleichbar zu einem Nietvorgang abläuft. Dabei wird der aus der Rückseite 2b herausragende Teil des Schaft 5 derartig gleichmäßig zu allen Seiten hin umgeformt, beispielsweise mithilfe einer Presse bzw. eines Presswerkzeuges, dass sich dieser zur Seite hin aufweitet und sich dadurch eine Art Schließkopf 8 ausbildet (s. Fig. 4b). Der endseitig umgeformte Schaft 5 ist in diesem Zustand derartig aufgeweitet, dass die Nabenscheibe 2 zwischen dem Schließkopf 8 und dem Absatz 9 eingeklemmt wird, wie in Fig. 4b dargestellt. Demnach wird mit dem Mitnahmemittel 3 als "Niet" eine Art Nietverbindung ausgebildet, bei der der endseitig umgeformte Schaft 5 den "Schließkopf" und der Absatz 9 mit dem Riemenauflagebereich 3b quasi den "Setzkopf" bildet. Der beschriebene Umformvorgang /Nietvorgang kann beispielsweise derartig erfolgen, dass durch die Presse nicht nur ein Schaft 5 endseitig umgeformt wird, sondern mehrere Schäfte 5 von unterschiedlichen eingesteckten Mitnahmemitteln 3 gleichzeitig, vorzugsweise alle Schäfte 5.

Um das endseitige Umformen des Schafts 5 zu vereinfachen, kann vorgesehen sein, dass der Schaft 5 stirnseitig bzw. koaxial zu seiner Mittenachse eine Vertiefung 10 aufweist, beispielsweise eine Ausfräsung oder eine Bohrung, durch die sich ein ringförmiger Endbereich 11 am Schaft 5 ausbildet. Dieser kann bei entsprechender Krafteinwirkung durch eine Presse in einfacher Weise zu allen Seiten hin umgeformt werden, um den Schließkopf 8 auszubilden.

Auf diese Weise wird jedes Mitnahmemittel 3 in einer Öffnung 6 in der Nabenscheibe 2 montiert, wobei die Öffnungen 6 umfangsseitig der Nabenscheibe 2 auf einem Kreis K mit einem vorgegebenen Abstand A angeordnet sind, wobei aufgrund des Abstandes A eine Lücke 7 zwischen den Mitnahmemitteln 3 entsteht. Der Abstand A der Öffnungen 6 ist dabei auf eine Teilung T der Nocken 20a eines in Fig. 1a dargestellten Nockenriemens 20, der auf dem Nockenrad 1 umläuft, abgestimmt. Bei vorgefertigten Mitnahmemitteln 3 kann durch eine entsprechende Wahl der Abstände A der Öffnungen 6 in der Produktion des Nockenrades 1 einfach und flexibel auf eine gewünschte Teilung T eines Nockenriemens 20 reagiert werden.

Im montierten Zustand steht das Mitnahmemittel 3 dabei lotrecht, d.h. parallel zur Drehachse D, von der Vorderseite 2a der Nabenscheibe 2 ab. Der auf dem Nockenrad 1 umlaufende Nockenriemen 20 kann dadurch auf dem Riemenauflagebereich 3b des montierten Mitnahmemittels 3 aufliegen, wobei die Nocken 20a des Nockenriemens 20 in den durch den Abstand A ausgebildeten Lücken 7 zwischen zwei Mitnahmemitteln 3 liegen, so dass der Nockenriemen 20 in herkömmlicher Weise durch Formschluss von einem angetriebenen Nockenrad 1 mitgenommen werden kann bzw. ein angetriebener Nockenriemen 20 ein mitlaufendes Nockenrad 1 mitnehmen kann.

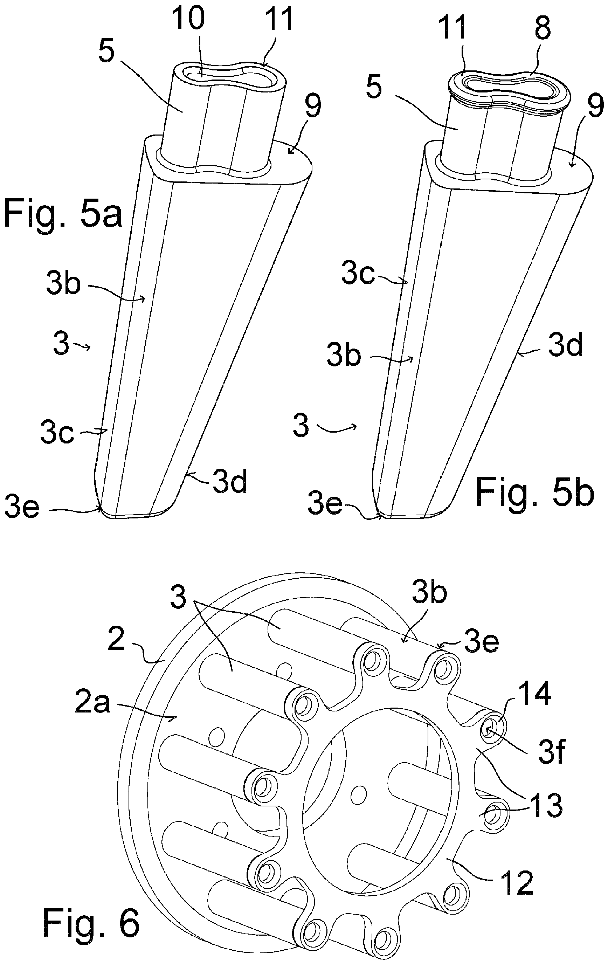

Gemäß Fig. 5a, 5b kann der Querschnitt des Mitnahmemittels 3 auch von einer kreisrunden Form abweichen, wobei dann auch der Schaft 5 bzw. die komplementär dazu ausgebildete Öffnung 6 in der Nabenscheibe 2 keinen kreisrunden Querschnitt mehr aufweisen, sondern einen asymmetrischen Querschnitt. Bei dieser Ausbildung verläuft eine Oberseite 3c des montierten Mitnahmemittels 3 im Riemenauflagebereich 3b, auf der der Nockenriemen 20 zwischen den Nocken 20 aufliegt, parallel zur Drehachse D während eine Unterseite 3d des Mitnahmemittels 3 demgegenüber angewinkelt ist, so dass das Mitnahmemittel 3 zu einem offenen zweiten Ende 3e hin dünner wird. Um diese Ausrichtung bei der Montage einfach einhalten zu können, weisen der am ersten Ende 3a ausgebildete Schaft 5 bzw. die komplementär dazu ausgeführt Öffnung 6 in der Nabenscheibe 2 ebenfalls einen asymmetrischen Querschnitt auf. Die endseitige Umformung erfolgt in analoger Weise wie bei dem zylindrischen Mitnahmemittel 3.

Gemäß Fig. 6 ist weiterhin vorgesehen, dass die Mitnahmemittel 3 an ihrem dem Schaft 5 gegenüberliegenden zweiten Ende 3e jeweils mit einer zusätzlichen Ringscheibe 12 verbunden sind, die parallel bzw. konzentrisch zur Nabenscheibe 2 liegt. Im dargestellten Ausführungsbeispiel sind in den zweiten Enden 3e der Mitnahmemittel 3 jeweils Innengewinde 3f und in der Ringscheibe 12 an abstehenden Fingern 13 jeweils Bohrungen 14 angeordnet, so dass die Ringscheibe 12 über eine Schraube (nicht dargestellt) endseitig an den Mitnahmemitteln 3 befestigt werden kann. Diese zusätzliche Ringscheibe 12 kann ein Abknicken der Mitnahmemittel 3 unter Belastung verhindern und daher für eine zusätzliche Stabilität des Nockenrades 1 sorgen.

Die Verbindung zwischen der Ringscheibe 12 und den Mitnahmemitteln 3 kann alternativ über eine Schweißverbindung oder ebenfalls über eine Nietverbindung wie oben beschrieben erfolgen, wobei dann die zweiten Enden 3e durch die Bohrungen 14 in der Ringscheibe 12 gesteckt und anschließend endseitig zu einem Schließkopf umgeformt werden können, um auch die Ringscheibe 12 vergleichbar wie die Nabenscheibe 2 einzuklemmen.

### Bezugszeichenliste

- 1: Nockenrad
- 2: Nabenscheibe
- 2a: Vorderseite der Nabenscheibe
- 2b: Rückseite der Nabenscheibe
- 3: Mitnahmemittel
- 3a: erstes Ende des Mitnahmemittels 3
- 3b: Riemenauflagebereich am Mitnahmemittel 3
- 3c: Oberseite des Mitnahmemittels 3
- 3d: Unterseite des Mitnahmemittels 3
- 3e: zweites Ende des Mitnahmemittels 3
- 3f: Innengewinde
- 4: Durchgangsloch
- 5: Schaft
- 6: Öffnung in der Nabenscheibe 2
- 7: Lücke
- 8: Schließkopf
- 9: Absatz
- 10: Vertiefung
- 11: ringförmiger Endbereich
- 12: Ringscheibe
- 13: Finger an der Ringscheibe 12
- 14: Bohrungen in den Fingern 13
- 20: Nockenriemen
- 20a: Nocken
- A: Abstand
- D: Drehachse
- K: Kreis
- T: Teilung der Nocken 20a

## Patentansprüche

1. Nockenrad (1) zum Aufnehmen eines Nockenriemens (20), mit einer Nabenscheibe (2) zum Aufsetzen auf eine Welle und mehreren Mitnahmemitteln (3) mit Riemenauflagebereichen (3b) zur Aufnahme des Nockenriemens (20), wobei die Mitnahmemittel (3) lotrecht von der Nabenscheibe (2) abstehend und voneinander beabstandet derartig an der Nabenscheibe (2) befestigt sind, dass sich zwischen den Mitnahmemitteln (3) Lücken (7) ausbilden zur formschlüssigen Aufnahme von Nocken (20a) des Nockenriemens (20), wobei an einem ersten Ende (3a) des jeweiligen Mitnahmemittels (3) ein Schaft (5) ausgebildet ist, der in eine Öffnung (6) in der Nabenscheibe (2) eingesteckt ist, **dadurch gekennzeichnet, dass** der Schaft (5) endseitig derartig zu einem Schließkopf (8) umgeformt ist, dass die Nabenscheibe (2) zwischen dem Schließkopf (8) und einem zwischen dem Schaft (5) und dem Riemenauflagebereich (3b) ausgebildeten Absatz (9) eingeklemmt ist.

2. Nockenrad (1) nach Anspruch 1, **dadurch g**ekennzeichnet, **dass** die Mitnahmemittel (3) im Riemenauflagebereich (3b) und/oder im Bereich des Schafts (5) im Querschnitt symmetrisch, insbesondere rund, oder asymmetrisch ausgeführt ist.

3. Nockenrad (1) nach Anspruch 1 oder 2, **dadurch gekennzeichnet, dass** der Schließkopf (8) durch einen umgeformten ringförmigen Endbereich (11) des Schafts (5) gebildet ist, wobei der ringförmige Endbereich (11) durch eine stirnseitig im Schaft (5) eingebrachte Vertiefung (10) ausgebildet ist.

4. Nockenrad (1) nach einem der vorhergehenden Ansprüche, **dadurch gekennzeichnet, dass** sich das Mitnahmemittel (3) im Riemenauflagebereich (3b) vom Absatz (9) ausgehend verjüngt.

5. Nockenrad (1) nach einem der vorhergehenden Ansprüche, **dadurch gekennzeichnet, dass** an einem zweiten Ende (3e) zumindest einiger der Mitnahmemittel (3) eine konzentrisch zur Nabenscheibe (2) angeordnete Ringscheibe (12) befestigt ist.

6. Nockenrad (1) nach Anspruch 5, **dadurch gekennzeichnet, dass** die Ringscheibe (12) formschlüssig und/oder kraftschlüssig an den zweiten Enden (3e) der zumindest einigen Mitnahmemittel (3) befestigt ist, beispielsweise angeschraubt und/oder angeschweißt und/oder endseitig an den Mitnahmemitteln (3) verklemmt ist.

7. Verfahren zum Herstellen eines Nockenrades (1), insbesondere eines Nockenrades (1) nach einem der vorhergehenden Ansprüche, mit mindestens den folgenden Schritten:
- Bereitstellen einer Nabenscheibe (2) mit Öffnungen (6) sowie mehrerer Mitnahmemittel (3) mit Riemenauflagebereichen (3b) zur Aufnahme eines Nockenriemens (20);
- Einstecken der Mitnahmemittel (3) in die Öffnungen (6) der Nabenscheibe (2) derartig, dass die Mitnahmemittel (3) lotrecht von einer Vorderseite (2a) der Nabenscheibe (2) abstehen und sich aufgrund eines Abstandes (A) zwischen den Öffnungen (6) eine Lücke (7) zwischen den eingesteckten Mitnahmemitteln (3) ausbildet;
- Ausbilden eines Schließkopfes (8) auf einer Rückseite (2b) der Nabenscheibe (2) durch ein endseitiges Umformen eines aus den Öffnungen (6) auf der Rückseite (2b) der Nabenscheibe (2b) herausragenden Teils des Schafts (5), so dass die Nabenscheibe (2) zwischen dem ausgebildeten Schließkopf (8) und einem zwischen dem Schaft (5) und dem Riemenauflagebereich (3b) ausgebildeten Absatz (9) eingeklemmt wird.

8. Verfahren nach Anspruch 7, **dadurch gekennzeichnet, dass** in den Schaft (5) stirnseitig eine Vertiefung (10) eingebracht wird, so dass sich ein ringförmiger Endbereich (11) am Schaft (5) ausbildet, und der ringförmige Endbereich (11) des Schafts (5) zum Ausbilden des Schließkopfes (8) umgeformt wird.

9. Verfahren nach Anspruch 7 oder 8, **dadurch gekennzeichnet, dass** das Ausbilden des Schließkopfes (8) durch ein Presswerkzeug erfolgt, das den Schaft (5) endseitig umformt.

10. Verfahren nach einem der Ansprüche 7 bis 9, **dadurch gekennzeichnet, dass** das Ausbilden des Schließkopfes (8) für mehrere Mitnahmemittel (3) gleichzeitig erfolgt.

## Claims

1. Cam wheel (1) for accommodating a cam belt (20), having a hub plate (2) for mounting on a shaft and a plurality of tappet means (3) including belt support areas (3b) for accommodating the cam belt (20), said tappet means (3) being attached, projecting perpendicularly away from said hub plate (2) and spaced apart from one another, to said hub plate (2) such that gaps (7) are formed between said tappet means (3) for accommodating cams (20a) of the cam belt (20) in a positive locking manner, wherein at a first end (3a) of the respective tappet means (3) a shaft (5) is formed which is inserted into an opening (6) in said hub plate (2),
**characterised in that**
said shaft (5) being reshaped at its end to form a closing head (8) in such a manner that said hub plate (2) is clamped-in between said closing head (8) and a shoulder (9) formed between said shaft (5) and said belt support area (3b).

2. Cam wheel (1) according to claim 1, **characterised in that** said tappet means (3) is designed, in the belt support area (3b) and/or in the region of the shaft (5), to be symmetrical in cross-section, in particularly round, or asymmetrical.

3. Cam wheel (1) according to claim 1 or 2, **characterised in that** said closing head (8) is formed by a reshaped ring-shaped end region (11) of said shafts (5), said ring-shaped end region (11) being formed by a recess (10) introduced into the end face in the shaft (5).

4. Cam wheel (1) according to one of the above claims, **characterised in that** said tappet means (3) tapers in the belt support area (3b) starting from the shoulder (9).

5. Cam wheel (1) according to one of the above claims, **characterised in that** at a second end (3e) of at least some of said tappet means (3) a washer (12) is attached, arranged concentrically with respect to the hub plate (2).

6. Cam wheel (1) according to claim 5, **characterised in that** said washer (12) is attached by means of positive locking and/or frictional connection to said second ends (3e) of said at least some tappet means (3), for example screwed on and/or welded on and/or clamped to said tappet means (3) at the ends.

7. Method for producing a cam wheel (1), in particular a cam wheel (1) according to one of the above claims, including at least the following steps:
- providing a hub plate (2) having openings (6) as well as a plurality of tappet means (3) with belt support areas (3b) for accommodating a cam belt (20);
- inserting said tappet means (3) into the openings (6) of said hub plate (2) such that the tappet means (3) project perpendicularly away from a front face (2a) of said hub plate (2) and a gap (7) is formed between the inserted tappet means (3) due to a distance (A) between the openings (6);
- forming a closing head (8) on a rear face (2b) of said hub plate (2) by reshaping the end of a part of the shaft (5) projecting out of said openings (6) on said rear face (2b) of said hub plate (2b), so that said hub plate (2) is clamped-in between the closing head (8) formed and a shoulder (9) formed between said shaft (5) and said belt support area (3b).

8. Method according to claim 7, **characterised in that** a recess (10) is introduced into the shaft (5) on an end face thereof so that a ring-shaped end region (11) is formed at the shaft (5), and the ring-shaped end region (11) of the shaft (5) is reshaped so as to form the closing head (8).

9. Method according to claim 7 or 8, **characterised in that** the forming of the closing head (8) happens by means of a pressing tool which reshapes the shaft (5) at its end.

10. Method according to one of the claims 7 through 9, **characterised in that** the forming of the closing head (8) happens simultaneously for a plurality of tappet means (3).

## Revendications

1. Roue à cames (1) servant à recevoir une courroie crantée (20), ladite roue à cames comportant une plaque de moyeu (2) à monter sur un arbre et plusieurs moyens d'entraînement (3) avec des zones de support de courroie (3b) servant à recevoir la courroie crantée (20), les moyens d'entraînement (3) étant fixés sur la plaque de moyeu (2) de manière à faire saillie perpendiculairement et espacés les uns des autres de sorte que des vides (7) se forment entre les moyens d'entraînement (3) pour la réception par forme complémentaire des cames (20a) de la courroie crantée (20),
une tige (5) étant formée sur une première extrémité (3a) du moyen d'entraînement respectif (3), tige qui est insérée dans une ouverture (6) dans la plaque de moyeu (2), **caractérisée en ce que** la tige (5) est déformée côté extrémité en une tête de fermeture (8) de sorte que la plaque de moyeu (2) est enserrée entre la tête de fermeture (8) et un épaulement (9) formé entre la tige (5) et la zone de support de courroie (3b).

2. Roue à cames (1) suivant la revendication 1, **caractérisée en ce que** les moyens d'entraînement (3) sont conçus de section symétrique, notamment ronde, ou asymétrique au niveau de la zone de support de courroie (3b) et/ou dans la zone de la tige (5).

3. Roue à cames (1) suivant la revendication 1 ou 2, **caractérisée en ce que** la tête de fermeture (8) est formée par une zone d'extrémité annulaire déformée (11) de la tige (5), la zone d'extrémité annulaire (11) étant formée par un évidement (10) pratiqué côté frontal dans la tige (5).

4. Roue à cames (1) suivant une des revendications précédentes, **caractérisée en ce que** dans la zone de support de courroie (3b) le moyen d'entraînement (3) s'amincit à partir de l'épaulement (9).

5. Roue à cames (1) suivant une des revendications précédentes, **caractérisée en ce qu**'un disque annulaire (12) disposé concentrique par rapport à la plaque de moyeu (2) est fixé sur une deuxième extrémité (3e) d'au moins quelques-uns des moyens d'entraînement (3).

6. Roue à cames (1) suivant la revendication 5, **caractérisé en ce que** le disque annulaire (12) est fixé par complémentarité des formes et/ou par adhérence sur les deuxièmes extrémités (3e) d'au moins quelques-uns des moyens d'entraînement (3), par exemple vissé et/ou soudé et/ou bloqué côté extrémité sur les moyens d'entraînement (3).

7. Procédé de fabrication d'une roue à cames (1) notamment d'une roue à cames (1) suivant une des revendications précédentes, ledit procédé comportant au moins les étapes suivantes :
- fourniture d'un disque de moyeu (2) avec des ouvertures (6), ainsi que plusieurs moyens d'entraînement (3) avec des zones de support de courroie (3b) pour la réception d'une courroie crantée (20),
- insertion des moyens d'entraînement (3) dans les ouvertures (6) de la plaque de moyeu (2) de sorte que moyens d'entraînement (3) font saillie perpendiculairement d'un côté frontal (2a) de la plaque de moyeu (2) et qu'en raison d'un espace (A) entre les ouvertures (6) un vide se forme entre les moyens d'entraînement (3) insérés,
- formation d'une tête de fermeture (8) sur un côté arrière (2b) du disque de moyeu (2) par une déformation côté extrémité d'une partie de la tige (5) faisant saillie hors des ouvertures (6) sur le côté arrière (2b) de la plaque de moyeu, de sorte que la plaque de moyeu (2) est enserrée entre la tête de fermeture formée (8) et un épaulement (9) formé entre la tige (5) et la zone de support de courroie (3b).

8. Procédé suivant la revendication 7, **caractérisé en ce qu**'un évidement (10) est pratiqué côté frontal dans la tige (5) de sorte qu'une zone d'extrémité annulaire (11) se forme au niveau de la tige (5) et que la zone d'extrémité annulaire (11) de la tige est déformée pour former la tête de fermeture (8).

9. Procédé suivant la revendication 7 ou 8, **caractérisé en ce que** la formation de la tête de fermeture (8) a lieu par un outil de pressage qui déforme la tige (5) côté extrémité.

10. Procédé suivant une des revendications 7 à 9, **caractérisé en ce que** la formation de la tête de fermeture (8) a lieu simultanément pour plusieurs moyens d'entraînement (3).
